# EUROPÄISCHE PATENTSCHRIFT

(11) **EP 2 190 617 B1**
(45) Veröffentlichungstag und Bekanntmachung des Hinweises auf die Patenterteilung: **09.11.2011**
(21) Anmeldenummer: 08803817.9
(22) Anmeldetag: 08.09.2008
(51) Int. Cl.: B23H 3/02

(54) **VERFAHREN ZUR ELEKTROCHEMISCHEN BEARBEITUNG**
ELECTROCHEMICAL PROCESSING METHOD
PROCÉDÉ D'USINAGE ÉLECTRO-CHIMIQUE

(30) Priorität: 10.09.2007 DE 102007043066
(43) Veröffentlichungstag der Anmeldung: 02.06.2010
(73) Patentinhaber: Robert Bosch GmbH, 70442 Stuttgart (DE)
(72) Erfinder: KRINGS, Norman, 71636 Ludwigsburg (DE); HACKENBERG, Juergen, 74343 Sachsenheim (DE); REITZLE, Alexander, 89231 Neu-Ulm (DE)
(86) Internationale Anmeldenummer: PCT/EP2008/061848
(87) Internationale Veröffentlichungsnummer: WO 2009/034051

(56) Entgegenhaltungen:
- EP-A- 0 336 777
- GB-A- 1 272 934
- US-A- 3 873 512
- US-B1- 6 228 246

## Beschreibung

### Stand der Technik

Die Erfindung betrifft ein Verfahren zur elektrochemischen Bearbeitung eines metallischen Werkstückes gemäß dem Oberbegriff des Anspruchs 1. Dokument US-B 7,090,763 zeigt ein derartiges Verfahren.

Mit Hilfe der elektrochemischen Metallbearbeitung (ECM) lässt sich in eine Oberfläche eines metallischen Werkstücks eine zwei- oder dreidimensionale Struktur mit einer Vertiefung mit einer vorgegebenen Form erzeugen. Hierzu wird eine Elektrode, deren Oberfläche ein Negativabbild der Form der zu erzeugenden Vertiefung ist, mit einer Vorschubgeschwindigkeit in das Werkstück, dessen Oberfläche bearbeitet werden soll, abgesenkt. Im Allgemeinen ist die Vorschubgeschwindigkeit dabei konstant. Das Werkzeug und das Werkstück werden von einem Elektrolyten umspült. Als Elektrolyt wird im Allgemeinen eine elektrisch leitende Salzlösung eingesetzt. Durch Anlegen eines Gleichstroms/einer Gleichspannung bzw. von Strom-/Spannungspulsen, die meist die Form eines Rechtecksignals aufweisen, an die Elektrode wird aus dem Werkstück elektrochemisch Material abgetragen. Ein derartiges Verfahren ist zum Beispiel aus DE-A 103 60 080 bekannt.

Damit die Reaktion, durch die Material aus dem metallischen Werkstück gelöst wird, abläuft, ist es erforderlich, dass bei einem elektrochemischen Metallbearbeitungsverfahren mit zwei Polen, einer Anode und einer Kathode, eine relative Grenzspannung, die zur Metallauflösung erforderlich ist, zwischen den beiden Elektroden überschritten wird. Dadurch werden auch unerwünschte Reaktionen, zum Beispiel Gasentwicklung, ermöglicht. Diese können sowohl an der Anode als auch an der Kathode erfolgen. Bei den aus dem Stand der Technik bekannten Verfahren führt dies zu einer geringeren Effizienz, da der Strom neben der Metallauflösung auch für unerwünschte Nebenreaktionen, zum Beispiel einer Sauerstoffentwicklung, verbraucht wird.

Ein weiterer Nachteil ist, dass aus dem Werkstück herausgelöste Metallionen an der Werkzeugelektrode elektrochemisch wieder abgeschieden werden können. Zudem ist es möglich, dass aufgrund der anliegenden Spannung, insbesondere dann, wenn sich die Leitfähigkeit des Elektrolyten zum Beispiel durch eine auftretende Verschmutzung ändert, Funkenüberschläge zwischen dem zu bearbeitenden Werkstück und der Werkzeugelektrode auftreten können. Die Funkenüberschläge führen zu Aufschmelzungen an der Werkzeugelektrode. Dies ist nur mit einem sehr großen technischen Aufwand zu verhindern.

Um ein konstantes Potential einzustellen, ist es zum Beispiel aus US-B 7,090,763 bekannt, eine Referenzelektrode einzusetzen, die sich ebenfalls im Elektrolyten befindet. Die Referenzelektrode wird dicht an die Oberfläche des zu bearbeitenden Metallstückes platziert. Eine solche Referenzelektrode weist ein konstantes, bekanntes und unveränderliches Potential auf. Jedoch lässt sich durch die Verwendung der Referenzelektrode der Prozess nicht vollständig kontrollieren, da durch die Referenzelektrode nur das Potential am Werkstück geregelt werden kann, jedoch nicht an der Werkzeugelektrode.

Aus der US 3,873,512 ist ein Verfahren zur Bearbeitung eines metallischen Werkstücks mit einem Werkzeug bekannt, bei dem das Werkzeug in direktem mechanischem Kontakt mit dem Werkstück tritt. Die Bearbeitung erfolgt in einer elektrolytischen Lösung.

### Offenbarung der Erfindung

### Vorteile der Erfindung

Bei einem erfindungsgemäßen Verfahren zur elektrochemischen Bearbeitung eines metallischen Werkstücks durch Abtragen von metallischem Material mittels Stromfluss zwischen einer Werkzeugelektrode und dem Werkstück, das eine zweite Elektrode bildet, in Gegenwart eines Elektrolyten wird ein zur Bearbeitung erforderliches Potential oder eine zur Bearbeitung erforderliche Stromdichte an der Werkzeugelektrode mittels einer Referenzelektrode, die ein unveränderliches Potential aufweist, bestimmt und eingestellt. Erfindungsgemäß ist eine zusätzliche Gegenelektrode im Elektrolyten positioniert, mittels derer ein Potential oder eine Stromdichte am zu bearbeitenden Werkstück unabhängig vom Potential oder von der Stromdichte der Werkzeugelektrode eingestellt werden kann.

Zum Abtragen von Metall aus dem Werkstück bei der elektrochemischen Metallbearbeitung wird das Werkstück als Anode geschaltet und eine Potentialdifferenz bzw. eine Stromdichte an Werkzeugelektrode und Werkstück angelegt. Durch das Abtragen des metallischen Materials aus dem Werkstück wird dieses geformt. Im Unterschied dazu wird bei Schalten des Werkstücks als Kathode und Anlegen einer Stromdichte oder einer Potentialdifferenz an Werkzeugelektrode und Werkstück Metall aus dem Elektrolyten auf dem Werkstück abgeschieden. Auf diese Weise lässt sich eine galvanische Beschichtung des Werkstückes realisieren.

Die Potentiale an der Werkzeugelektrode und dem Werkstück werden vorzugsweise mittels eines Bipotentiostaten eingestellt. Durch die Einstellung der Potentiale mittels des Bipotentiostaten ist es möglich, das Potential am Werkstück so zu verändern, dass eine elektrochemische Bearbeitung erfolgt, jedoch an der Werkzeugelektrode ein Potential anliegt, bei welchem keine elektrochemischen Reaktionen stattfinden. Der Bipotentiostat ermöglicht es, die Potentiale der Werkzeugelektrode und des Werkstückes unabhängig voneinander in Bezug auf die Referenzelektrode einzustellen.

Durch das erfindungsgemäße Verfahren wird die Form des Werkzeuges im Wesentlichen identisch in das Werkstück übertragen. Verschmutzungen der Elektrode durch elektrochemische Abscheidung von Oxiden oder. Fremdmetallen, wie dies bei den aus dem Stand der Technik bekannten Verfahren auftritt, wird unterbunden. Ein weiterer Vorteil der bipotentiostatischen Prozessführung ist-das Verhindern von Funkenüberschlägen zwischen dem Werkstück und der Werkzeugelektrode. Dies ist bedingt durch den elektronischen. Aufbau des Bipotentiostaten. Derartige Funkenüberschläge führen zu Aufschmelzungen am Werkzeug, was jedoch bei den aus dem Stand der Technik bekannten Verfahren nur mit sehr großem technischen Aufwand verhindert werden kann.

Bei der bipotentiostatischen Prozessführung sind die Elektroden elektronisch derart geschaltet, dass ein direkter Stromfluss zwischen der Werkzeugelektrode und der Gegenelektrode sowie dem Werkstück und der Gegenelektrode erfolgt, jedoch nicht zwischen der Werkzeugelektrode und dem Werkstück. Ein vermehrter Stromfluss, wie dieser zum Beispiel auftritt, wenn die Metallkonzentration im Elektrolyten zunimmt oder der Abstand zwischen den Elektroden zu gering wird, wird über die Gegenelektrode abgeleitet.

Dieser vermehrte Stromfluss über die Gegenelektrode kann erfindungsgemäß als Parameter zum Regeln des Abstandes zwischen der Werkzeugelektrode und dem Werkstück eingesetzt werden. Hierbei ist jeweils ein möglichst kleiner Spalt gewünscht, um eine möglichst genaue Abbildung der Werkzeugelektrode im Werkstück zu erreichen.

Ein weiterer Vorteil des Bipotentiostaten ist es, dass die Spaltregelung deutlich einfacher aufgebaut werden kann als bei einem Verfahren zur elektrochemischen Bearbeitung, wie dieses aus dem Stand der Technik bekannt ist, bei dem ein Zweipol eingesetzt wird. Aufwändige und deshalb teure Elektronikkomponenten zur Verhinderung von Kurzschlüssen werden bei der bipotentiostatischen Spaltregelung nicht benötigt.

Wenn eine galvanische Beschichtung des Werkstückes erfolgen soll, dann erfolgt die Einstellung der Stromdichten an der Werkzeugelektrode und dem Werkstück vorzugsweise mittels eines Bigalvanostaten. Im Allgemeinen lässt sich in der gleichen Vorrichtung sowohl das Verfahren zur elektrochemischen Bearbeitung durch Abtragen von metallischem Material als auch die galvanische Beschichtung realisieren, da im Allgemeinen ein Bipotentiostat auch als Bigalvanostat funktioniert.

In einer bevorzugten Ausführungsform weist der Elektrolyt eine Leitfähigkeit im Bereich von 50 bis 200 mS/cm auf. Vorteil dieser hohen Leitfähigkeit des Elektrolyten ist es, dass die Referenzelektrode nahezu willkürlich in das elektrochemische System integriert werden kann, da Bedingungen wie bei üblich verwendeten Salzbrücken vorliegen. Aus diesem Grund können Potentiale auch über größere Entfernungen zur Werkzeugelektrode und dem als Elektrode geschalteten Werkstück gemessen und geregelt werden.

Eine Vorrichtung zur Durchführung des Verfahrens zur elektrochemischen Bearbeitung eines metallischen Werkstückes umfasst ein Reservoir, eine Werkzeugelektrode sowie eine Referenzelektrode, wobei in dem Reservoir ein Elektrolyt bereitgestellt ist und die Werkzeugelektrode und die Referenzelektrode derart angeordnet sind, dass diese von dem Elektrolyten bedeckt sind. Das Reservoir kann weiterhin ein als Elektrode geschaltetes zu bearbeitendes Werkstück aufnehmen, wobei das als Elektrode geschaltete, zu bearbeitende Werkstück der Werkzeugelektrode gegenüber positioniert wird. In dem Reservoir ist weiterhin auch eine Gegenelektrode aufgenommen, die ebenfalls derart angeordnet ist, dass diese von dem Elektrolyten bedeckt ist.

Im Allgemeinen werden die Werkzeugelektrode, das als Elektrode geschaltete Werkstück, die Referenzelektrode und die Gegenelektrode für die elektrochemische Metallbearbeitung des Werkstücks von einem Bipotentiostaten angesteuert.

Bei einer bipotentiostatischen Prozessführung werden die elektrochemischen Potentiale, die während der Bearbeitung an den Elektroden, das heißt der Werkzeugelektrode und dem Werkzeug, unabhängig voneinander in Bezug auf eine Referenzelektrode eingestellt. Im Gegensatz dazu werden bei einer bigalvanostatischen Prozessführung die Stromdichten, die an den beiden Elektroden anliegen sollen, unabhängig voneinander eingestellt. Der Bezug ist hierbei auch wieder die Referenzelektrode. Da jedoch an dieser keine Stromdichte eingestellt werden kann, regelt der Bigalvanostat die Stromdichte an der jeweiligen Elektrode auf den vorgegebenen Wert ein. Hierdurch stellt sich eine Potentialdifferenz zwischen der jeweiligen Elektrode und der Referenzelektrode ein, die dann als Regelgröße herangezogen wird. Die Prozesssteuerung ist sowohl für die elektrochemische Metallbearbeitung als auch die elektrochemische Abscheidung gleich. Auch bei der elektrochemischen Abscheidung kann die Prozesssteuerung bipotentiostatisch oder bigalvanostatisch durchgeführt werden.

Da zwischen dem Werkstück und der Werkzeugelektrode bedingt durch den elektronischen Aufbau des Bipotentiostaten kein direkter Stromfluss erfolgt, können Funkenüberschläge, die durch Kurzschlüsse entstehen, vermieden werden. Auf diese Weise wird die Prozesssicherheit deutlich erhöht. Ein weiterer Vorteil des erfindungsgemäßen Verfahrens und der erfindungsgemäßen Vorrichtung ist, dass Ablagerungen an der Werkzeugelektrode durch die Steuerung der dort ablaufenden elektrochemischen Reaktionen vermieden werden können. Dies ist möglich, da das Potential der Werkzeugelektrode niedriger eingestellt werden kann als das Potential, welches erforderlich ist, damit die elektrochemischen Reaktionen ablaufen. Die Vermeidung der Ablagerungen führt zu deutlich längeren Standzeiten der Elektroden und einer daraus resultierenden Kostenersparnis, da die Elektronen in ihrer Herstellung sehr teuer sein können.

Ein weiterer Vorteil ist es, dass bei Verwendung von Natriumnitrat-Elektrolyten eine elektrochemische Nitratzersetzungsreaktion durch Anlegen eines gezielten Potentials verhindert werden kann. Hierdurch lässt sich eine deutliche Standzeitverlängerung des Elektrolyten erzielen.

Weitere Vorteile sind, das durch das gezielte Anlegen eines Potentials auch eine Wasserstoffentwicklung an der Werkzeugelektrode vermieden werden kann. Zudem lassen sich auch weniger geeignete Metalle, beispielsweise Bronze, Messing oder Kupfer als Werkzeugelektrodenmaterial beispielsweise in Nitratelektrolyten einsetzen.

Neben der vorstehend beschriebenen Verhinderung der elektrochemischen Nitratzersetzungsreaktion können auch alle weiteren elektrochemischen Reaktionen am Werkstück kontrolliert werden. Dies ist zum Beispiel die Vermeidung von Cr⁶⁺-Bildung bei der elektrochemischen Bearbeitung von chromhaltigen Legierungen. Bei Cr⁶⁺ handelt es sich um einen Gefahrstoff, bei Cr³⁺ hingegen nicht. Das Standardpotential E⁰ in basischer Lösung beträgt für die Umwandlung von Cr zu Cr³⁺ E⁰ = -0,74 V und für die Umwandlung von Cr³⁺ zu Cr⁶⁺ E⁰ = -0,13 V. Das bedeutet, dass bei einem Potential der Anode zwischen -0,74 und -0,13 V zwar eine Auflösung von Cr in Form von Cr³⁺, aber keine Bildung von Cr⁶⁺ erfolgt. Weiterhin lässt sich auch die Bildung von Sauerstoff unterdrücken. Aus der Vermeidung unerwünschter Nebenreaktionen resultiert zudem eine Erhöhung der Stromausbeute.

Neben der elektrochemischen Metallbearbeitung bzw. der elektrochemischen Abscheidung von Materialien auf dem zu bearbeitenden Werkstück mit einem konstant anliegenden Potential bzw. einer konstant anliegenden Stromdichte ist es auch möglich, den bipotentiostatischen Prozess gepulst durchzuführen. Hierzu werden die Elektroden mit einem gepulsten Strom, einer gepulsten Stromdichte bzw. Potentialpulsen beaufschlagt. Die gepulste Prozessführung wird bei gleichzeitiger Regelung durchgeführt.

Die bipotentiostatische bzw. bigalvanostatische Prozessführung erlaubt eine vollständige Kontrolle der elektrochemischen Prozesse, die während der Bearbeitung ablaufen. Neben der Verhinderung der Cr⁶⁺-Bildung hat dies den weiteren Vorteil, dass zum Beispiel auch Passivschichten auf der Oberfläche in der Bearbeitungspause, insbesondere bei gepulster Bearbeitung, reduktiv entfernt werden können.

Durch die Vermeidung der Gasentwicklung, die sich durch das erfindungsgemäße Verfahren und die erfindungsgemäße Vorrichtung erzielen lässt, wird auch eine homogenere Metallauflösung erreicht und hierdurch geringere Oberflächenrauheiten und bessere Bearbeitungsqualitäten erzielt.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: eine schematische Darstellung einer Vorrichtung zur elektrochemischen Bearbeitung.
- Figur 2: eine schematische Darstellung einer elektrochemischen Metallabscheidung gemäß dem Stand der Technik,
- Figur 3: eine erfindungsgemäße elektrochemische Metallbearbeitung,
- Figur 4: eine schematische Darstellung einer elektrochemischen Metallbearbeitung gemäß dem Stand der Technik, bei der ein Funkenüberschlag auftritt,
- Figur 5: eine schematische Darstellung des erfindungsgemäßen Verfahrens zur Kurzschlussvermeidung.

### Ausführungsformen der Erfindung

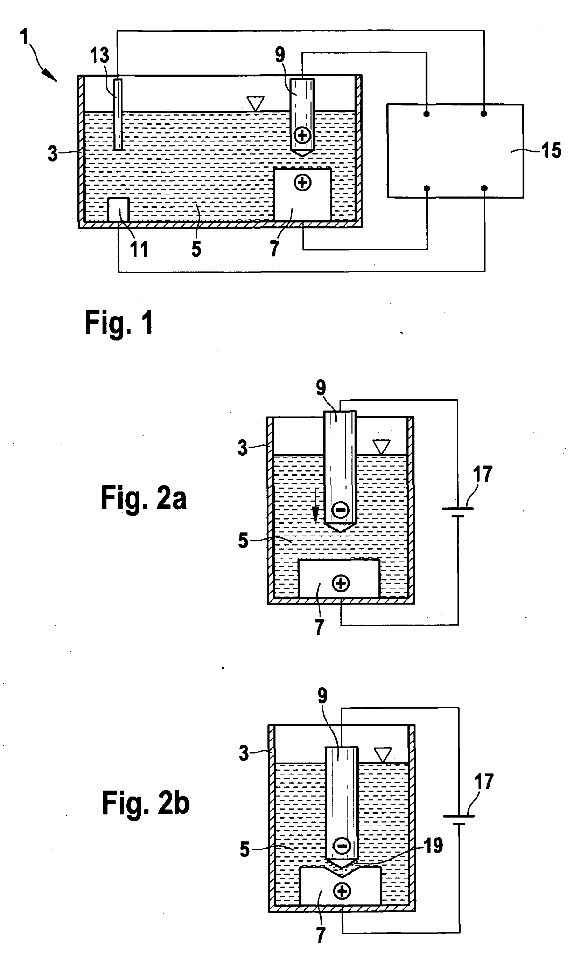

In Figur 1 ist schematisch eine Vorrichtung zur elektrochemischen Bearbeitung eines metallischen Werkstückes dargestellt.

Eine Vorrichtung 1 umfasst ein Reservoir 3, in welchem ein Elektrolyt 5 enthalten ist. In dem Elektrolyten 5 ist ein zu bearbeitendes Werkstück 7 aufgenommen. Bei einer elektrochemischen Metallbearbeitung wird in das zu bearbeitende Werkstück 7 eine Struktur eingebracht. Dies erfolgt mittels einer Werkzeugelektrode 9. Zwischen dem zu bearbeitenden Werkstück 7 und der Werkzeugelektrode 9 wird eine Spannung angelegt. Dies führt dazu, dass Metallionen aus dem zu bearbeitenden Werkstück 7 herausgelöst werden und so die Oberfläche strukturiert werden kann. Für eine präzise Bearbeitung der Oberfläche des zu bearbeitenden Werkstückes 7 ist ein geringer Abstand zwischen der Werkzeugelektrode 9 und dem zu bearbeitenden Werkstück 7 erforderlich. Dieser geringe Abstand führt bei den aus dem Stand der Technik bekannten Verfahren dazu, dass sich durch eine steigende Konzentration an Metallionen im Spalt zwischen dem zu bearbeitenden Werkstück 7 und der Werkzeugelektrode 9 ein Kurzschluss bilden kann und es zu einem Funkenüberschlag kommen kann. Durch den Funkenüberschlag ist es möglich, dass die Werkzeugelektrode 9 beschädigt wird. Weiterhin ist es auch möglich, dass sich an der Werkzeugelektrode 9 Metallionen ablagern. Hierdurch verändert sich die Feingeometrie der Werkzeugelektrode 9 und die Bearbeitung des zu bearbeitenden Werkstückes 7 wird unpräziser. Aus diesem Grund ist erfindungsgemäß im Elektrolyten 5 weiterhin eine Referenzelektrode 11 aufgenommen. Mit Hilfe der Referenzelektrode 11 lässt sich das Potential am zu bearbeitenden Werkstück 7 genau regeln. Hierzu weist die Referenzelektrode 11 ein bekanntes und unveränderliches Potential auf. Durch eine hochohmige Verbindung mit einem Potentiostaten wird gewährleistet, dass an der Referenzelektrode 11 keine durch das Verfahren bedingte elektrochemische Reaktion stattfindet. Eine Steuerung der Reaktion am zu bearbeitenden Werkstück 7 durch elektrochemische Metallbearbeitung ist möglich, da Potentiale an dem zu bearbeitenden Werkstück 7 und der Werkzeugelektrode 9 immer in Bezug auf das Potential der Referenzelektrode 11 angelegt werden.

Für eine vollständige Kontrolle des elektrochemischen Metallbearbeitungsprozesses wird erfindungsgemäß auch das Potential der Werkzeugelektrode 9 genau geregelt. Hierzu wird eine Gegenelektrode 13 in die Vorrichtung 1 eingebracht. Die Gegenelektrode 13 ist ebenso wie die Referenzelektrode 11, die Werkzeugelektrode 9 und das zu bearbeitende Werkstück 7 vom im Reservoir 3 enthaltenden Elektrolyten bedeckt.

Die Potentialregelung selbst erfolgt mit einem Bipotentiostaten 15. Hierdurch lassen sich die Potentiale der Werkzeugelektrode 9 des zu bearbeitenden Werkstücks 7 jeweils unabhängig voneinander in Bezug auf das Potential der Referenzelektrode 11 einstellen. Durch die Verwendung des Bipotentiostaten 15 und die zusätzliche Gegenelektrode 13 ist es nun möglich, das Potential am zu bearbeitenden Werkstück 7 derart zu verändern, dass eine elektrochemische Bearbeitung stattfindet, wobei jedoch an der Werkzeugelektrode 9 ein Potential angelegt wird, bei welchem keine elektrochemischen Reaktionen ablaufen.

Durch die elektrochemische Bearbeitung wird die Form der Werkzeugelektrode 9 wie bereits aus dem Stand der Technik bekannt im Wesentlichen im Verhältnis 1 : 1 auf das zu bearbeitende Werkstück 7 übertragen. Eine bislang auftretende Verschmutzung der Werkzeugelektrode 9 durch elektrochemische Abscheidung von Oxiden oder Fremdmetallen wird jedoch durch die erfindungsgemäße Verschaltung effektiv unterbunden, genauso wie eine mögliche, stattfindende Gasentwicklung.

Da im Allgemeinen mit Elektrolyten 5 mit hoher Leitfähigkeit, das heißt einer Leitfähigkeit im Bereich von 50 bis 200 mS/cm, gearbeitet wird und somit Bedingungen wie bei üblich verwendeten Salzbrücken vorliegen, ist es möglich, die Referenzelektrode 11 nahezu willkürlich in die Vorrichtung 1 zu integrieren. Eine Positionierung der Referenzelektrode 11 und der Gegenelektrode 13 in unmittelbarer Nähe zum zu bearbeitenden Werkstück 7 und der Werkzeugelektrode 9 ist nicht erforderlich. Dies liegt daran, dass aufgrund der hohen Leitfähigkeit des Elektrolyten 5 auch über größere Entfernungen Potentiale zum zu bearbeitenden Werkstücks 7 und der Werkzeugelektrode 9 gemessen bzw. geregelt werden können.

Ein weiterer Effekt der bipotentiostatischen Prozeßführung, wie sie in Figur 1 dargestellt ist, ist, dass Funkenüberschläge zwischen dem zu bearbeitenden Werkstück 7 und der Werkzeugelektrode 9 verhindert werden können. Derartige Funkenüberschläge führen zu Aufschmelzungen an der Werkzeugelektrode 9. Dies wird bei den aus dem Stand der Technik bekannten Verfahren durch einen großen technischen Aufwand verhindert. Bei der bipotentiostatischen Prozessführung erfolgt, bedingt durch den Aufbau des Bipotentiostaten, kein direkter Stromfluss zwischen dem zu bearbeitenden Werkstück 7 und der Werkzeugelektrode 9. Ein direkter Stromfluss erfolgt zwischen der Gegenelektrode 13 und der Werkzeugelektrode 9 bzw. dem zu bearbeitenden Werkstück 7. Für eine elektrochemische Metallbearbeitung ist es erforderlich, dass zwischen dem Werkstück 7 und der Werkzeugelektrode 9 eine Potentialdifferenz anliegt. Diese stellt die elektrochemische Triebkraft für den elektrochemischen Metallbearbeitungsprozess dar. Eine derartige Potentialdifferenz liegt insbesondere auch dann an, wenn sowohl das Werkstück 7 als auch die Werkzeugelektrode 9 ein positives Potential aufweisen, die Potentiale von Werkstück 7 und Werkzeugelektrode 9 jedoch unterschiedlich groß sind. Stromfluss wird immer über die Gegenelektrode 13 abgeleitet. Dieser Stromfluss kann als Parameter zum Regeln des Abstandes zwischen der Werkzeugelektrode 9 und dem zu bearbeitenden Werkstück 7 eingesetzt werden. Diese Regelung des Abstandes wird auch als Spaltregelung bezeichnet. Die Spaltregelung durch den vermehrten Stromfluss hat den Vorteil, dass diese wesentlich einfacher aufgebaut werden kann als bei elektrochemischen Metallbearbeitungsprozessen, wie sie aus dem Stand der Technik bekannt sind, bei denen aufwändige und somit teure Elektronikkomponenten zur Verhinderung von Kurzschlüssen eingesetzt werden müssen.

Die in Figur 1 dargestellte Vorrichtung 1 lässt sich sowohl zur elektrochemischen Metallbearbeitung einsetzen, bei der metallisches Material aus einem zu bearbeitenden Werkstück 7 abgetragen wird, als auch für eine Abscheidung von Metall auf dem zu bearbeitenden Werkstück 7. Sowohl für die elektrochemische Metallbearbeitung, als auch für die Abscheidung eines Materials kann alternativ zum bipotentiostatischen Prozess ein bigalvanostatischer Prozess eingesetzt werden. Bei einem bigalvanostatisch geführten Prozess wird jedoch nicht das Potential sondern die anliegende Stromdichte geregelt. Da ein Bipotentiostat 15 in der Regel auch als Bigalvanostat funktioniert, ist es nicht notwendig, für einen bigalvanostatisch geführten Prozess andere Bauteile einzusetzen.

In Figur 2 ist ein elektrochemischer Metallbearbeitungsprozess gemäß dem Stand der Technik dargestellt.

Bei dem aus dem Stand der Technik bekannten elektrochemischem Metallbearbeitungsprozess wird eine Zweipol-Strom-/-Spannungsquelle 17 verwendet. An den positiven Pol der Zweipol-Strom-/-Spannungsquelle 17 wird das zu bearbeitende Werkstück 7 und an den negativen Pol die Werkzeugelektrode 9 angeschlossen. Bei der Bearbeitung am zu bearbeitenden Werkstück 7 aus beispielsweise Stahl, werden in großem Maße Fe^{2+/3+}-Ionen durch elektrochemische Auflösungsprozesse am zu bearbeitenden Werkstück 7 erzeugt. Diese können als Abscheidung 19 an der Werkzeugelektrode 9 abgeschieden werden. Die Abscheidung erfolgt zum Beispiel als Fe₂O₃ oder metallisches Eisen. Wenn das Verfahren zur Präzisionsbearbeitung eingesetzt wird, führt diese Abscheidung 19 dazu, dass die Qualität der Bearbeitung sehr schnell sinkt und die Werkzeugelektrode 9 ausgetauscht werden muss.

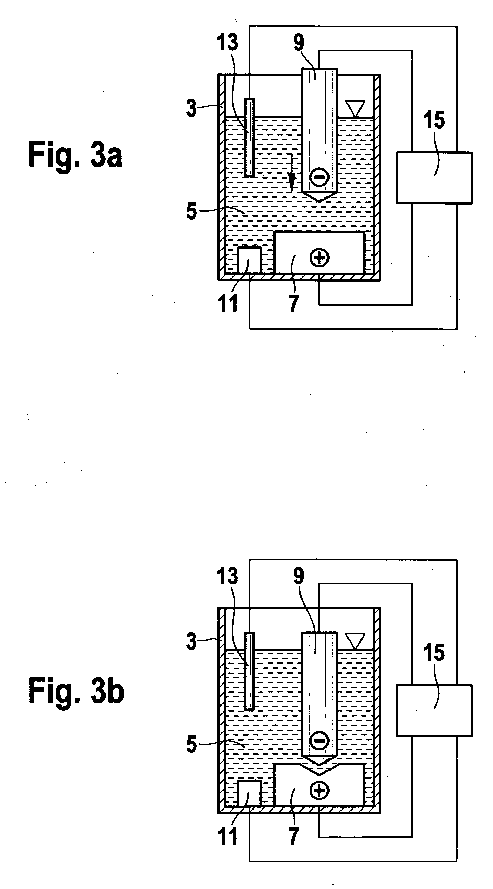

Durch das erfindungsgemäße Verfahren wird, wie in Figur 3 dargestellt, das Ausbilden einer Abscheidung 19 auf der Werkzeugelektrode 9 verhindert. Dies ist dadurch möglich, dass durch die Verwendung der Referenzelektrode 11 und der Gegenelektrode 13 an der Werkzeugelektrode 9 ein elektrochemisches Potential aufgeprägt werden kann, durch das das Ausbilden einer Abscheidung 19 durch Metallionen auf der Werkzeugelektrode 9 vermieden werden kann. Bei der Bearbeitung von eisenhaltigen Werkstoffen wird der Werkzeugelektrode 9 in Abhängigkeit von der Konzentration des Elektrolyten 5 zum Beispiel ein elektrochemisches Potential aufgeprägt, das größer ist als 0,445 V gegenüber einer Normalwasserstoffelektrode. Hierdurch kann die Qualität der Bearbeitung über einen wesentlich längeren Zeitraum aufrechterhalten werden als bei den aus dem Stand der Technik bekannten Verfahren, wie es zum Beispiel in Figur 2 dargestellt ist. Die Bearbeitungsdauer wird bei dem erfindungsgemäßen Verfahren nicht durch das Ausbilden einer Abscheidung 19 auf der Werkzeugelektrode 9 beeinträchtigt. Auch kann das Ausbilden einer Abscheidung 19 aus anderen Legierungsbestandteilen von zum Beispiel Stahl, wenn das zu bearbeitende Werkstück 7 aus Stahl besteht oder auch von anderen Metallen, wenn ein Werkstück 7 aus einem anderen Metall bearbeitet werden soll, verhindert werden. Um eine Abscheidung zum Beispiel von Chrom bzw. Chromoxid zu vermeiden, wird ein elektrochemisches Potential aufgeprägt, das vorzugsweise größer als 0,31 V gegenüber einer Normalwasserstoffelektrode ist. Zur Vermeidung einer Abscheidung aus Nickel wird ein elektrochemisches Potential aufgeprägt, das größer als -0,23 V gegenüber einer Normalwasserstoffelektrode ist und zur Vermeidung der Abscheidung von Kupfer ein elektrochemisches Potential, das größer als 0,337 V gegenüber einer Normalwasserstoffelektrode ist. Die Normalwasserstoffelektrode ist dabei ein Beispiel für die jeweils als Referenzelektrode 11 eingesetzte Elektrode. Andere mögliche Referenzelektroden sind Ag/AgCl, Hg/HgSO₄ oder eine Kalomelelektrode. Gleichzeitig wird auch die Gefahr der elektrochemischen Elektrodenauflösung, wie sie zum Beispiel bei einer bipolaren Prozessführung mit nur zwei Elektroden, wie sie im Stand der Technik bekannt ist und für eine Zweipol-Strom-/-Spannungsquelle, wie sie in Figur 2 dargestellt ist, gegeben ist, auf ein Minimum beschränkt.

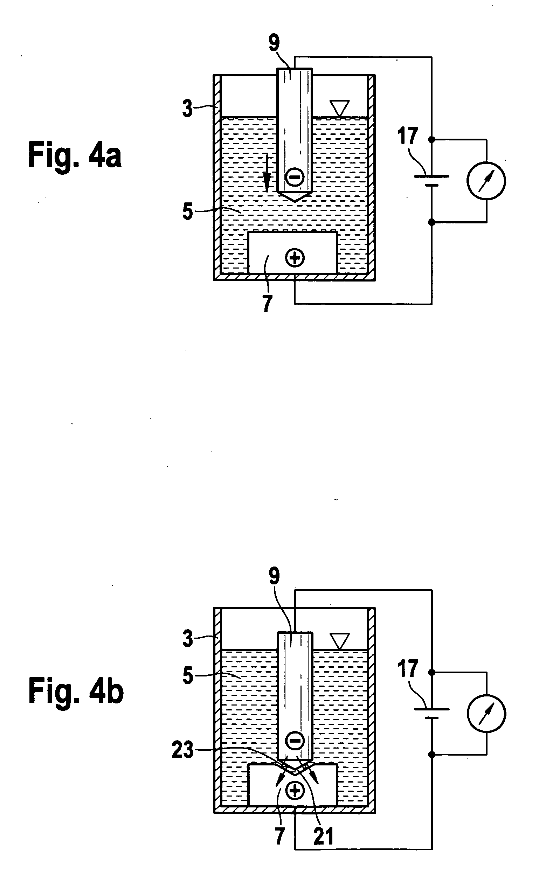

In Figur 4 ist ein Verfahren zur elektrochemischen Metallbearbeitung dargestellt, wie es aus dem Stand der Technik bekannt ist, wobei durch einen zu geringen Spalt ein Funkenüberschlag auftreten kann.

Während der elektrochemischen Metallbearbeitung ändert sich der elektrische Widerstand im Arbeitsspalt 21 zwischen dem zu bearbeitenden Werkstück 7 und der Werkzeugelektrode 9. Diese Veränderung resultiert zum Beispiel aus nicht weggespülten Abtragsprodukten durch die elektrochemische Metallbearbeitung oder einen zu kleinen Arbeitsspalt. Durch das Regelverhalten bei zweipoligen Strom-/Spannungsquellen 17, wie sie bei Verfahren zur elektrochemischen Metallverarbeitung eingesetzt werden, wie diese aus dem Stand der Technik bekannt sind, kann dies zu einem Funkenüberschlag 23 zwischen dem zu bearbeitenden Werkstück 7 und der Werkzeugelektrode 9 führen. Der Funkenüberschlag führt dazu, dass die Elektroden, das heißt das zu bearbeitende Werkstück 7 und die Werkzeugelektrode 9, beschädigt werden.

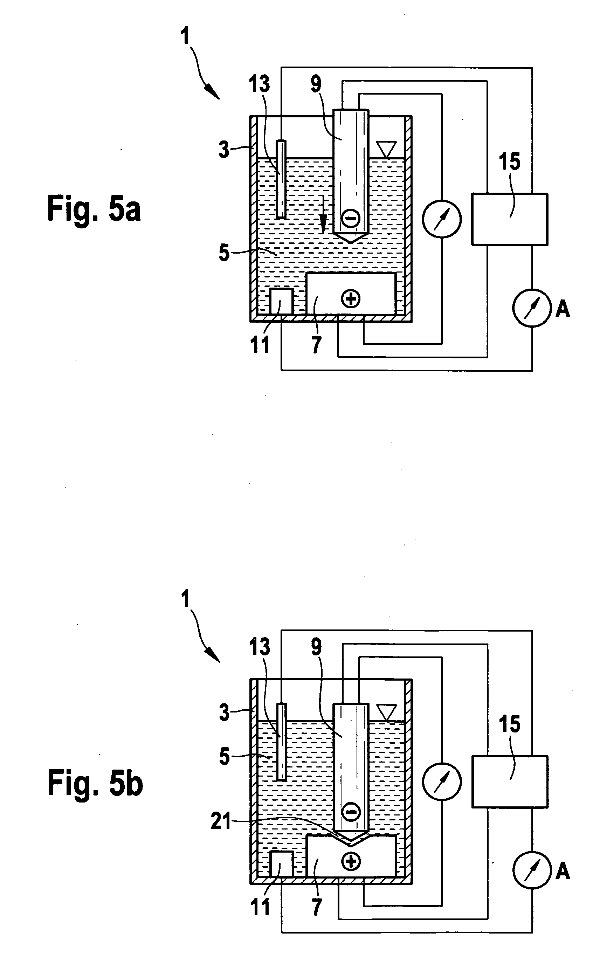

Bei dem erfindungsgemäßen, in Figur 5 dargestellten bipotentiostatischen Aufbau für die elektrochemische Metallbearbeitung wird ein Funkenüberschlag im Arbeitsspalt 21 ausgeschlossen, da kein direkter Stromfluss zwischen der Werkzeugelektrode 9 und dem Werkstück 7 erfolgt. Dass kein direkter Stromfluss zwischen der Werkzeugelektrode 9 und dem Werkstück 7 erfolgt, liegt daran, dass die elektrochemischen Potentiale unabhängig voneinander und in Bezug auf die Referenzelektrode 11 eingestellt werden. Wenn sich der Widerstand zwischen der Werkzeugelektrode 9 und dem zu bearbeitenden Werkstück 7 ändert, wird sich ein sich ändernder Stromfluss zwischen dem zu bearbeitenden Werkstück 7 und der Gegenelektrode 13 bzw. der Werkzeugelektrode 9 und der Gegenelektrode 13 detektiert. Die Gegenelektrode 13 kann sich dabei an einer beliebigen Stelle innerhalb des Reservoirs 3 im Elektrolyten 5 befinden. Vorzugsweise wird die Gegenelektrode 13 jedoch in der Nähe der Werkzeugelektrode 9 bzw. des zu bearbeitenden Werkstücks 7 platziert, da ein kleinerer Abstand zwischen den jeweiligen Elektroden 7, 9, 13 zu einem größeren fließenden Strom führt. Die anliegende Potentialdifferenz zwischen dem zu bearbeitenden Werkstück und der Werkzeugelektrode 9 bleibt konstant.

Die Änderung des Stromflusses zwischen dem zu bearbeitenden Werkstück 7 und der Gegenelektrode 13 bzw. der Werkzeugelektrode 9 und der Gegenelektrode 13 kann auch als Regelparameter für den Abstand zwischen der Werkzeugelektrode 9 und dem zu bearbeitenden Werkstück 7 herangezogen werden, da eine indirekte Beziehung zwischen dem fließenden Strom und dem Abstand zwischen dem zu bearbeitenden Werkstück und der Werkzeugelektrode 9 besteht. Beim Anlegen von Spannungspulsen, wie dies üblicherweise für die elektrochemische Metallbearbeitung erfolgt, liegen in einer Pulspause an der Werkzeugelektrode 9 und dem zu bearbeitenden Werkstück 7 Potentiale an, bei denen keine störenden faradayschen Reaktionsströme fließen. Eine Bestimmung der Größe des Arbeitsspaltes 21, das heißt dem Abstand zwischen dem zu bearbeitenden Werkstück 7 und der Werkzeugelektrode 9 erfolgt mit Hilfe der kapazitiven Ströme einer Doppelschichtumladung. Wenn sich die Doppelschichten beider Elektroden, das heißt der Werkzeugelektrode und des zu bearbeitenden Werkstücks 7 überlappen, steigt der Strom deutlich an. Dies entspricht einer Entladung von Kondensatoren. Eine Abstandsregelung, die auf den kapazitiven Strömen der Doppelschichtumladung beruht, erhöht die Prozesssicherheit des elektrochemischen Metallbearbeitungsverfahrens, da Störströme während der Regelphase minimiert werden und sich das elektrochemische System im Gleichgewicht befindet. Die Abstandsbestimmung erfolgt durch eine Echtzeitmessung des analogen Stromsignals. Da ein mathematischer Zusammenhang zwischen dem Abstand und dem fließenden elektrischen Strom besteht, kann direkt aus dem Strom der Abstand bestimmt werden. Für den Zusammenhang von Abstand d und fließende elektrischen Strom I gilt I ∼ 1/d. Bei einem drastischen Stromanstieg wird die Vorschubbewegung der Elektrode unterbrochen, bis der Stromwert wieder unter einen vorgegebenen Grenzwert gefallen ist. Anschließend wird der Vorschub erneut eingeschaltet.

Das erfindungsgemäße Verfahren zur elektrochemischen Metallbearbeitung lässt sich in allen Prozessen anwenden, bei denen Werkstücke elektrochemisch bearbeitet werden. Derartige Bauteile sind zum Beispiel Bauteile von Kraftstoffinjektoren wie Injektorkörper oder Düsen sowie Einspritzventile. Weitere geeignete Anwendungsbereiche sind zum Beispiel die elektrochemische Entgrattechnik, die Herstellung von Ventilen, Rails, Injektoren oder Hochdruckpumpen im Automobilbereich.

## Patentansprüche

1. Verfahren zur elektrochemischen Bearbeitung eines metallischen Werkstückes (7) mittels Stromfluss zwischen einer Werkzeugelektrode (9) und dem Werkstück (7), das eine zweite Elektrode bildet, in Gegenwart eines Elektrolyten (5), wobei die elektrochemische Bearbeitung des Werkstücks (7) durch Abtragen von metallischem Material mittels Stromfluss zwischen der Werkzeugelektrode (9) und dem Werkstück (7) erfolgt, wobei ein zur Bearbeitung erforderliches Potential oder eine zur Bearbeitung erforderliche Stromdichte an der Werkzeugelektrode (9) mittels einer Referenzelektrode (11), die ein unveränderliches Potential aufweist, bestimmt und eingestellt wrd, **dadurch gekennzeichnet dass** eine zusätztiche Gegenelektrode (13) im Elektrolyten (5) positioniert ist, mittels derer ein Potential oder eine Stromdichte am zu bearbeitenden Werkstück (7) unabhängig vom Potential oder von der Stromdichte der Werkzeugelektrode (9) eingestellt werden kann.

2. Verfahren gemäß Anspruch 1, **dadurch gekennzeichnet, dass** die Einstellung der Potentiale an der Werkzeugelektrode (9) und dem Werkstück (7) mittels eines Bipotentiostaten (15) erfolgt.

3. Verfahren gemäß Anspruch 1, **dadurch gekennzeichnet, dass** die Einstellung der Stromdichten an der Werkzeugelektrode (9) und dem Werkstück (7) mittels eines Bigalvanostaten erfolgt.

4. Verfahren gemäß Anspruch 1 oder 2, **dadurch gekennzeichnet, dass** das Potential an der Werkzeugelektrode (9) derart eingestellt wird, dass eine elektrochemische Bearbeitung erfolgt, das Potential aber unterhalb eines Potentials liegt ab dem eine elektrochemische Reaktion an der Werkzeugelektrode (9) stattfindet.

5. Verfahren gemäß einem der Ansprüche 1 bis 4, **dadurch gekennzeichnet, dass** der Elektrolyt (5) eine Leitfähigkeit im Bereich von 50 bis 200 mS/cm aufweist.

6. Verfahren gemäß einem der Ansprüche 1 bis 5, **dadurch gekennzeichnet, dass** die Elektroden (7, 9, 11, 13) derart geschaltet sind, dass ein direkter Stromfluss zwischen der Werkzeugelektrode (9) und der Gegenelektrode (13) sowie dem Werkstück (7) und der Gegenelektrode (13) erfolgt, jedoch nicht zwischen der Werkzeugelektrode (9) und dem Werkstück (7).

7. Verfahren gemäß Anspruch 6, **dadurch gekennzeichnet, dass** ein Abstand (21) zwischen der Werkzeugelektrode (9) und dem Werkstück (7) in Abhängigkeit vom Stromfluss an der Gegenelektrode (13) eingestellt wird.

8. Verfahren gemäß einem der Ansprüche 1 bis 7, **dadurch gekennzeichnet, dass** an das zu bearbeitende Werkstück (7) und die Werkzeugelektrode (9) Strompulse oder gepulste Stromdichten bzw. Potentialpulse angelegt werden.

## Claims

1. Method for the electrochemical machining of a metallic workpiece (7) by means of current flow between the tool electrode (9) and the workpiece (7), which forms a second electrode, in the presence of an electrolyte (5), the electrochemical machining of the workpiece (7) being performed by removing metallic material by means of current flow between the tool electrode (9) and the workpiece (7), a potential required for the machining or a current density required for the machining at the tool electrode (9) being determined by means of a reference electrode (11), which has an unchanging potential, and set, **characterized in that** an additional counterelectrode (13), by means of which a potential or a current density at the workpiece (7) to be machined can be set independently of the potential or the current density of the tool electrode (9), is positioned in the electrolyte (5).

2. Method according to Claim 1, **characterized in that** the setting of the potentials at the tool electrode (9) and the workpiece (7) is performed by means of a bipotentiostat (15).

3. Method according to Claim 1, **characterized in that** the setting of the current densities at the tool electrode (9) and the workpiece (7) is performed by means of a bigalvanostat.

4. Method according to Claim 1 or 2, **characterized in that** the potential at the tool electrode (9) is set in such a way that an electrochemical machining is performed, but the potential lies below a potential from which an electrochemical reaction takes place at the tool electrode (9).

5. Method according to one of Claims 1 to 4, **characterized in that** the electrolyte (5) has a conductivity in the range from 50 to 200 mS/cm.

6. Method according to one of Claims 1 to 5, **characterized in that** the electrodes (7, 9, 11, 13) are connected in such a way that a direct current flow takes place between the tool electrode (9) and the counterelectrode (13) as well as between the workpiece (7) and the counterelectrode (13), but not between the tool electrode (9) and the workpiece (7).

7. Method according to Claim 6, **characterized in that** a distance (21) between the tool electrode (9) and the workpiece (7) is set in dependence on the current flow at the counterelectrode (13).

8. Method according to one of Claims 1 to 7, **characterized in that** current pulses or pulsed current densities or potential pulses are applied to the workpiece (7) to be machined and to the tool electrode (9).

## Revendications

1. Procédé de traitement électrochimique d'une pièce à travailler (7) métallique au moyen d'un flux de courant entre une électrode d'outil (9) et la pièce à travailler (7) formant une deuxième électrode, en présence d'un électrolyte (5), dans lequel le traitement électrochimique de la pièce à travailler (7) est effectué par enlèvement de matière métallique au moyen d'un flux de courant entre l'électrode d'outil (9) et la pièce à travailler (7), dans lequel un potentiel nécessaire au traitement ou une densité de courant nécessaire au traitement au niveau de l'électrode d'outil (9) est déterminé(e) et réglé(e) au moyen d'une électrode de référence (11) présentant un potentiel invariable, **caractérisé en ce qu'**une contre-électrode (13) supplémentaire est positionnée dans l'électrolyte (5), au moyen de laquelle un potentiel ou une densité de courant peut être réglé(e) au niveau de la pièce à travailler (7) à traiter indépendamment du potentiel ou de la densité de courant de l'électrode d'outil (9).

2. Procédé selon la revendication 1, **caractérisé en ce que** le réglage des potentiels est effectué au niveau de l'électrode d'outil (9) et de la pièce à travailler (7) au moyen d'un bi-potentiostat (15).

3. Procédé selon la revendication 1, **caractérisé en ce que** le réglage des densités de courant est effectué au niveau de l'électrode d'outil (9) et de la pièce à travailler (7) au moyen d'un bigalvanostat.

4. Procédé selon la revendication 1 ou 2, **caractérisé en ce que** le potentiel au niveau de l'électrode d'outil (9) est réglé de telle sorte qu'un traitement électrochimique soit effectué mais que le potentiel se trouve au-dessous d'un potentiel à partir duquel une réaction électrochimique intervient au niveau de l'électrode d'outil (9).

5. Procédé selon l'une quelconque des revendications 1 à 4, **caractérisé en ce que** l'électrolyte (5) présente une conductibilité dans la plage de 50 à 200 mS/cm.

6. Procédé selon l'une quelconque des revendications 1 à 5, **caractérisé en ce que** les électrodes (7, 9, 11, 13) sont conformées de telle sorte qu'un flux de courant direct intervient entre l'électrode d'outil (9) et la contre-électrode (13) ainsi qu'entre la pièce à travailler (7) et la contre-électrode (13), mais pas entre l'électrode d'outil (9) et la pièce à travailler (7).

7. Procédé selon la revendication 6, **caractérisé en ce qu'**une distance (21) entre l'électrode d'outil (9) et la pièce à travailler (7) est réglée en fonction du flux de courant au niveau de la contre-électrode (13).

8. Procédé selon l'une quelconque des revendications 1 à 7, **caractérisé en ce que** des impulsions de courant ou des densités de courant pulsées ou des impulsions de potentiel sont appliquées à la pièce à travailler (7) à traiter et à l'électrode d'outil (9).
